# EUROPEAN PATENT APPLICATION

(11) **EP 4 129 122 A1**
(43) Date of publication of application: **08.02.2023**
(21) Application number: 21782201.4
(22) Date of filing: 22.03.2021
(51) Int. Cl.: A47G 23/10, G10L 13/00, G10L 13/08, G10L 15/00, G10L 15/10, G10L 15/22

(54) **INFORMATION PROCESSING DEVICE, INTERACTIVE ROBOT, CONTROL METHOD**

(30) Priority: 30.03.2020 JP 2020060600
(71) Applicant: Sony Group Corporation, Minato-Ku, Tokyo, 108-0075 (JP)
(72) Inventor: NAKAYAMA, Ryosuke, Tokyo 108-0075 (JP); ABE, Hajime, Tokyo 108-0075 (JP); YOSHITO, Saori, Tokyo 108-0075 (JP)
(74) Representative: D Young & Co LLP
(86) International application number: PCT/JP2021/011574
(87) International publication number: WO 2021/200307

(57) **Abstract**

The present technology relates to an information processing apparatus, an interactive robot, and a control method that enable two persons to smoothly communicate with each other. The information processing apparatus according to an aspect of the present technology analyzes utterances that are generated by two users having a conversation through a network and detected by interactive robots used respectively by the two users, and causes the respective interactive robots to output a conversation assisting voice according to a status of the conversation between the two users, the conversation assisting voice being a voice that provides assistance to the conversation. The present technology is applicable to a server that controls the operations of interactive robots used respectively by two persons remotely having a conversation.

## Description

### [Technical Field]

The present technology relates to an information processing apparatus, an interactive robot, and a control method that enable two persons to smoothly communicate with each other.

### [Background Art]

Interactive agents for assisting a user by responding by voice to a voice query from the user have been widely used in recent years. By talking to a device having such an interactive agent function, the user is able to listen to a weather forecast, reproduce music, and check a schedule.

Described in PTL 1 is an interactive agent system that interactively collects personal information and proposes, for example, appropriate products to individual users according to the collected personal information.

Disclosed in NPL 1 is a matching service that makes a video call through a third party called a matchmaker.

### [Citation List]

### [Patent Literature]

[PTL 1] Japanese Patent Laid-open No. 2008-52449

### [Non Patent Literature]

[NPL 1] "Yi Dui," Internet, <URL https://www.520yidui.com/>, searched on March 16, 2020

### [Summary]

### [Technical Problem]

A conventional interactive agent system generally responds, for example, to questions from a user while the user and the system are in a 1:1 relationship.

In view of the above circumstances, the present technology has been made to enable two persons to smoothly communicate with each other.

### [Solution to Problem]

According to an aspect of the present technology, there is provided an information processing apparatus including an analysis section configured to analyze utterances that are generated from two users having a conversation through a network and that are detected by respective interactive robots used by the two users, and a control section configured to cause the respective interactive robots to output a conversation assisting voice according to a status of the conversation between the two users, the conversation assisting voice being a voice for providing assistance to the conversation.

According to another aspect of the present technology, there is provided an interactive robot including a serving section configured to serve an alcoholic beverage to a user, and a conversation control section configured to detect an utterance of the user after the alcoholic beverage is served, transmit voice data of the detected utterance to an information processing apparatus configured to analyze the utterance of the user and the utterance of another user acting as a conversation partner, and output a conversation assisting voice that is transmitted from the information processing apparatus according to a status of a conversation between the two users, the conversation assisting voice being a voice that provides assistance to the conversation.

The one aspect of the present technology performs a process of analyzing utterances that are generated by two users having a conversation through a network and that are detected by interactive robots used respectively by the two users, and causing the respective interactive robots to output a conversation assisting voice according to the status of the conversation between the two users, the conversation assisting voice being a voice that provides assistance to the conversation.

The other aspect of the present technology performs a process of serving an alcoholic beverage to a user, detecting an utterance of the user after the alcoholic beverage is served and transmitting voice data of the detected utterance to an information processing apparatus that analyzes the utterance of the user and the utterance of another user acting as a conversation partner. Further, the other aspect of the present technology performs a process of causing a conversation assisting voice that is transmitted from the information processing apparatus according to a status of a conversation between the two users, the conversation assisting voice being a voice that provides assistance to the conversation.

### [Brief Description of Drawings]

[FIG. 1]

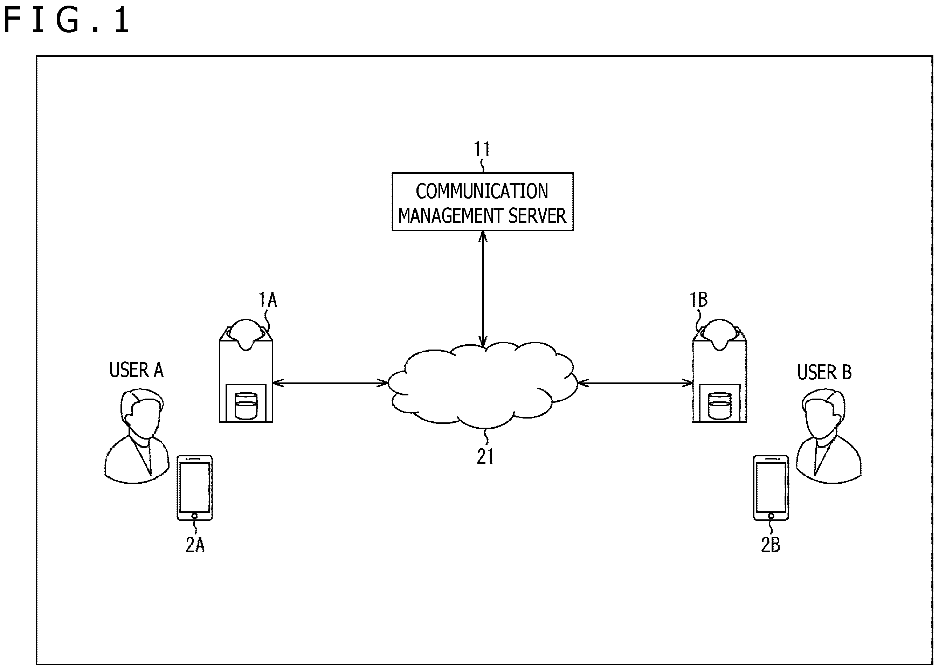

   FIG. 1 is a diagram illustrating an example configuration of a voice communication system according to an embodiment of the present technology.
[FIG. 2]

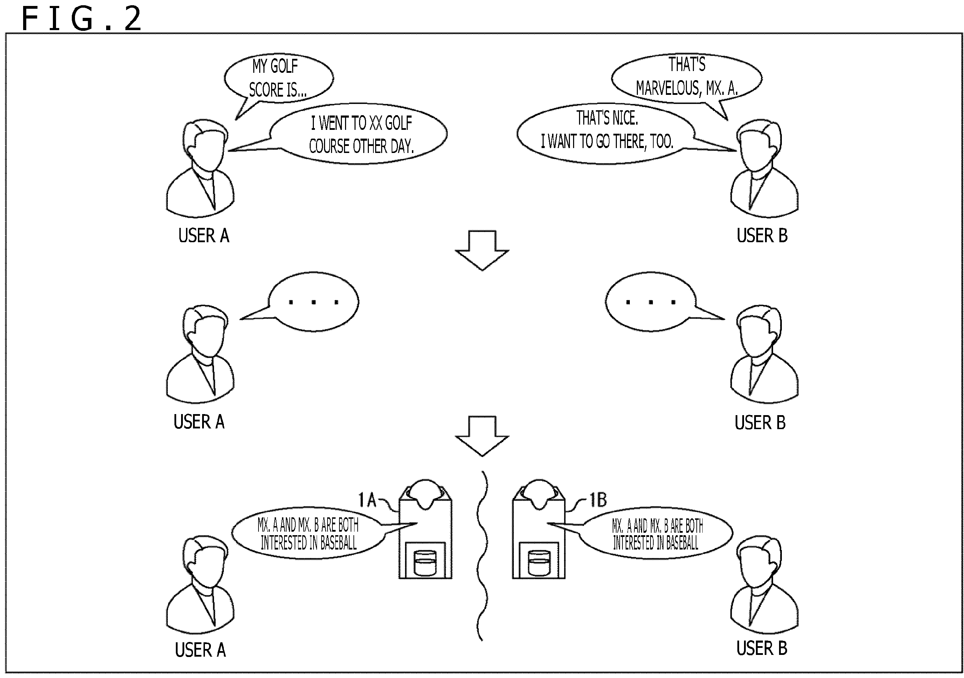

   FIG. 2 is a diagram illustrating an example output of an assisting utterance.
[FIG. 3]

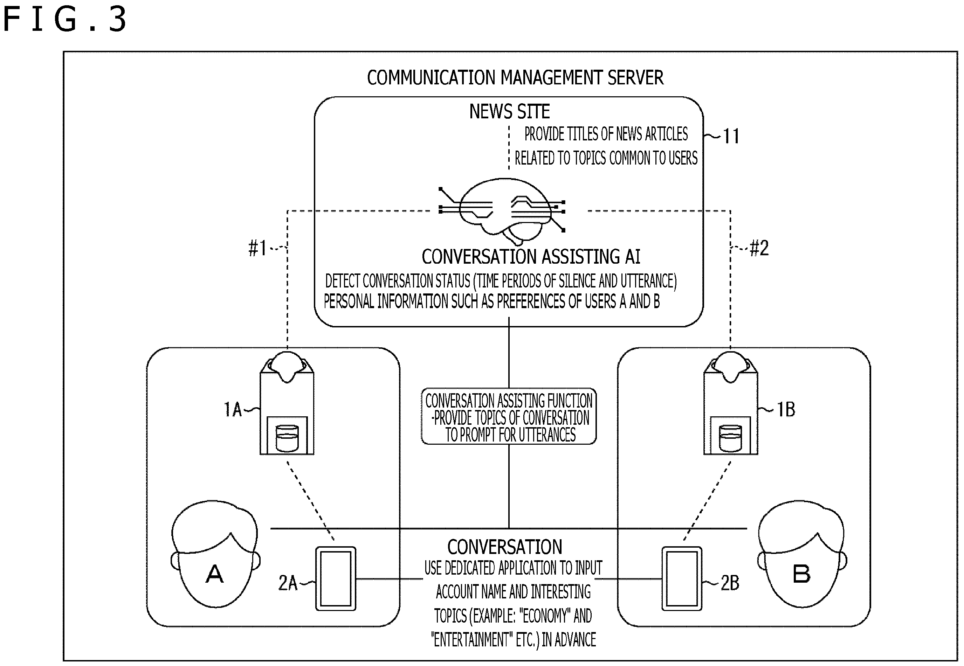

   FIG. 3 is a diagram illustrating an example of AI that implements a conversation assisting function.
[FIG. 4]

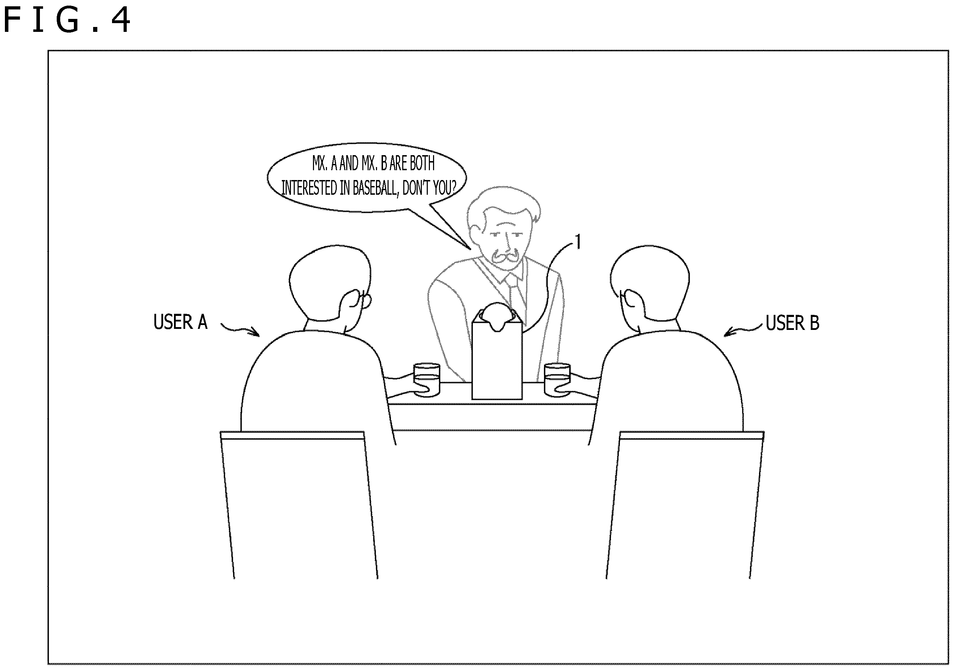

   FIG. 4 is a diagram illustrating a state of a conversation.
[FIG. 5]

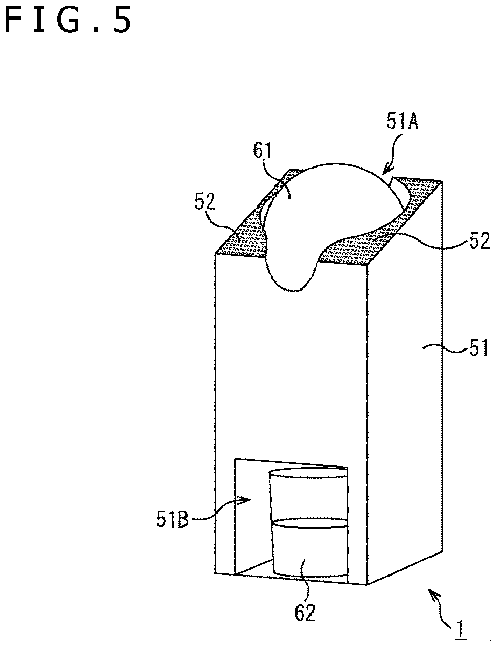

   FIG. 5 is an enlarged perspective view illustrating an appearance of an interactive agent apparatus.
[FIG. 6]

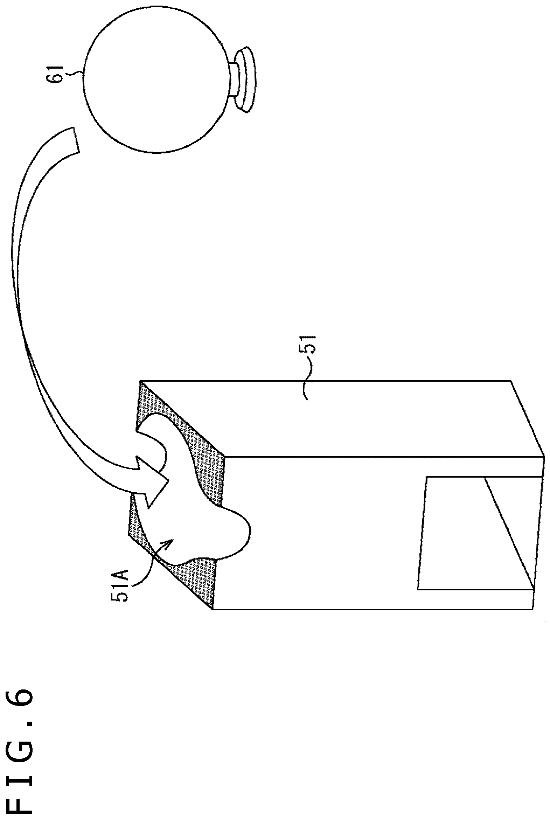

   FIG. 6 is a diagram illustrating an example in which a bottle is mounted.
[FIG. 7]

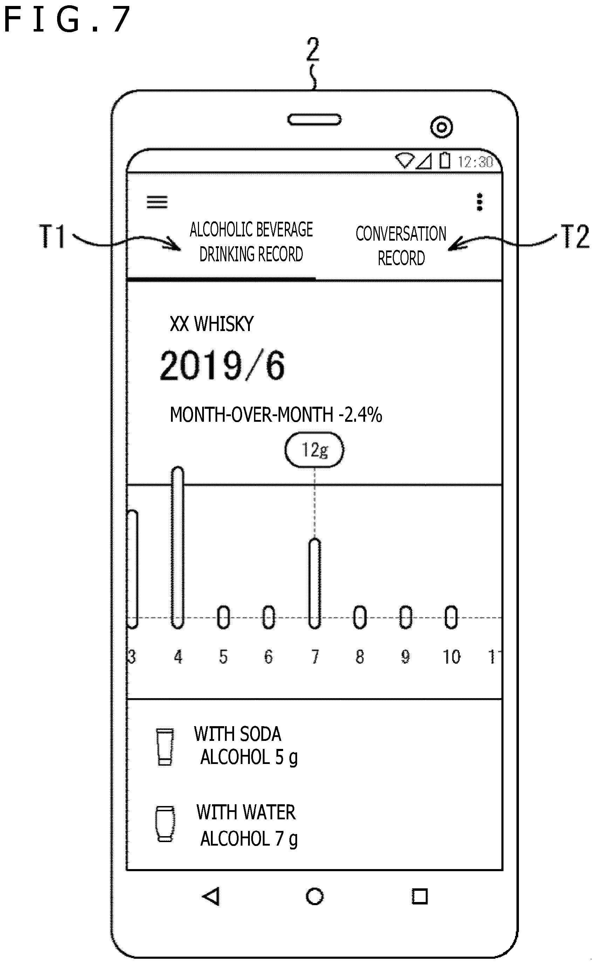

   FIG. 7 is a diagram illustrating an example in which an alcoholic beverage drinking record is displayed.
[FIG. 8]

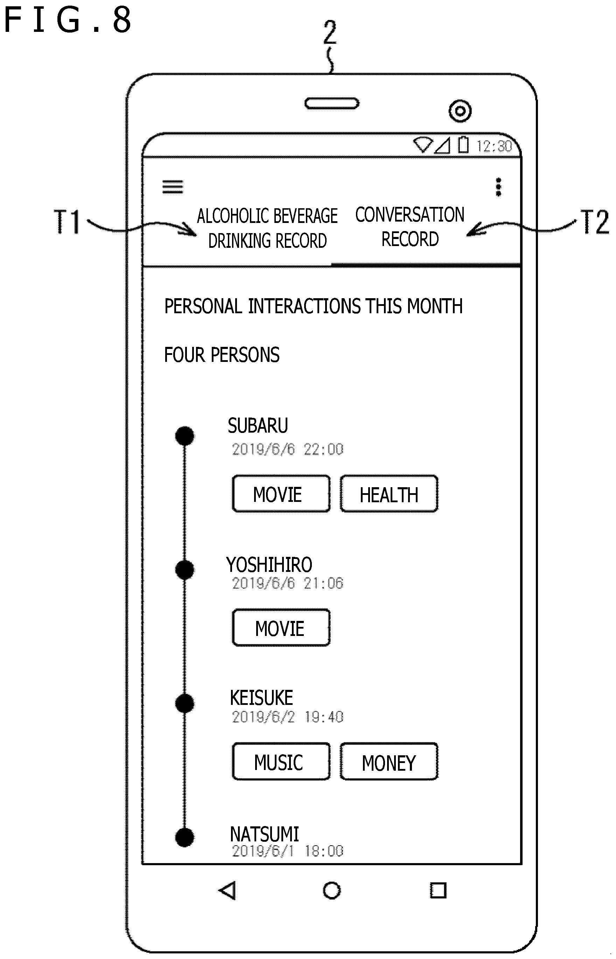

   FIG. 8 is a diagram illustrating an example in which a conversation record is displayed.
[FIG. 9]

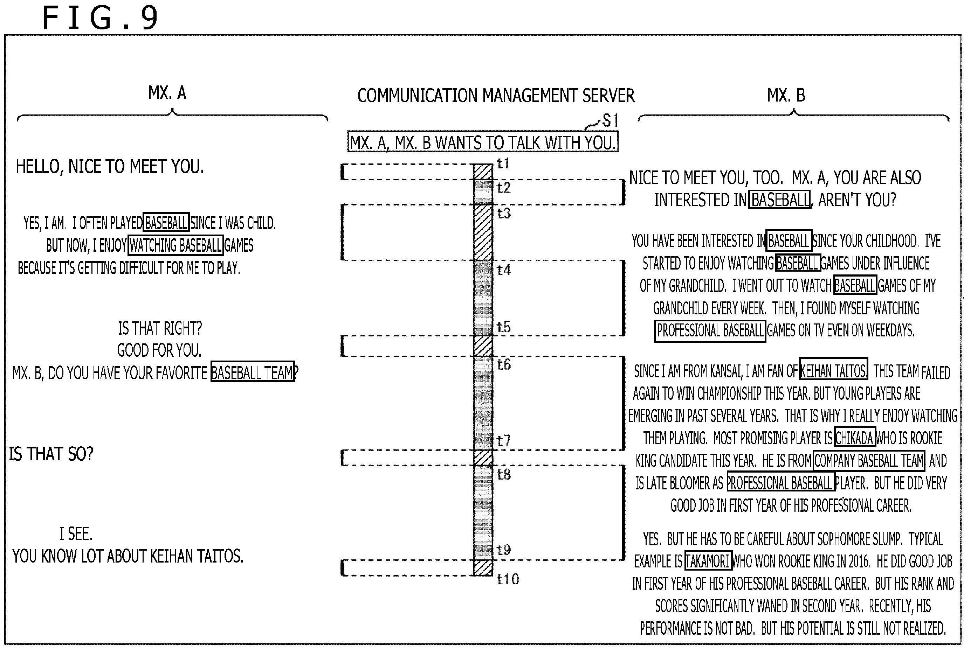

   FIG. 9 is a diagram illustrating a specific example of a conversation between users A and B.
[FIG. 10]

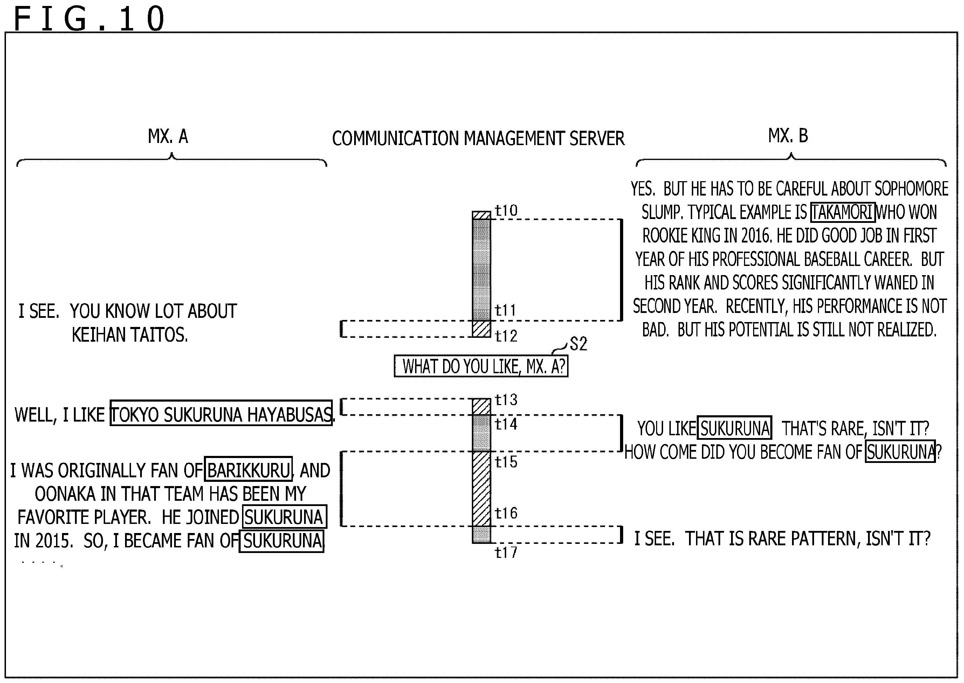

   FIG. 10 is a diagram illustrating a specific example of the conversation between the users A and B, continued from FIG. 9.
[FIG. 11]

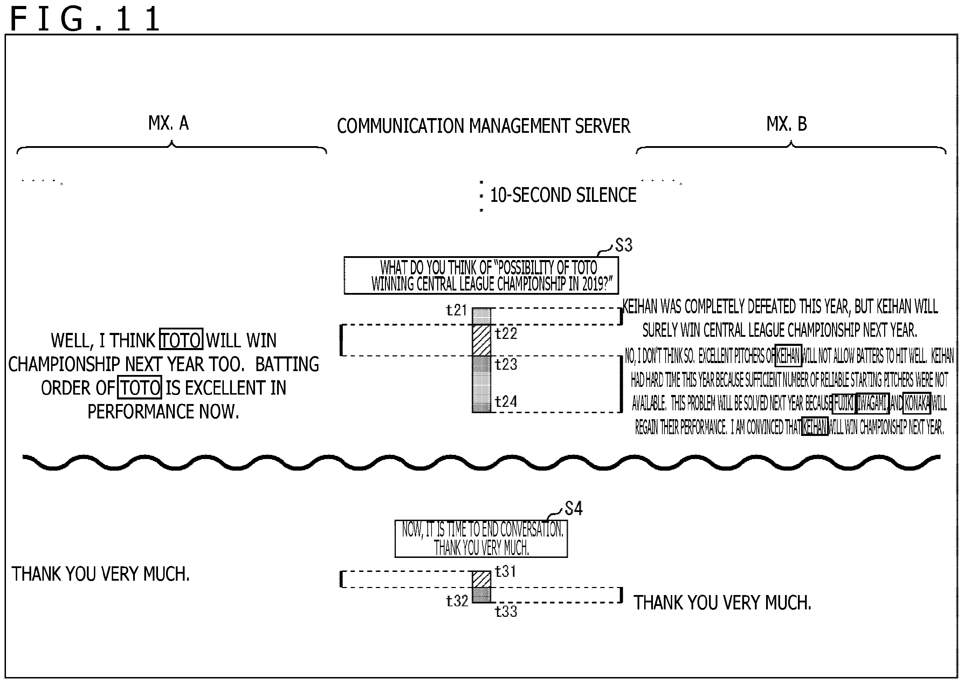

   FIG. 11 is a diagram illustrating a specific example of the conversation between the users A and B, continued from FIG. 10.
[FIG. 12]

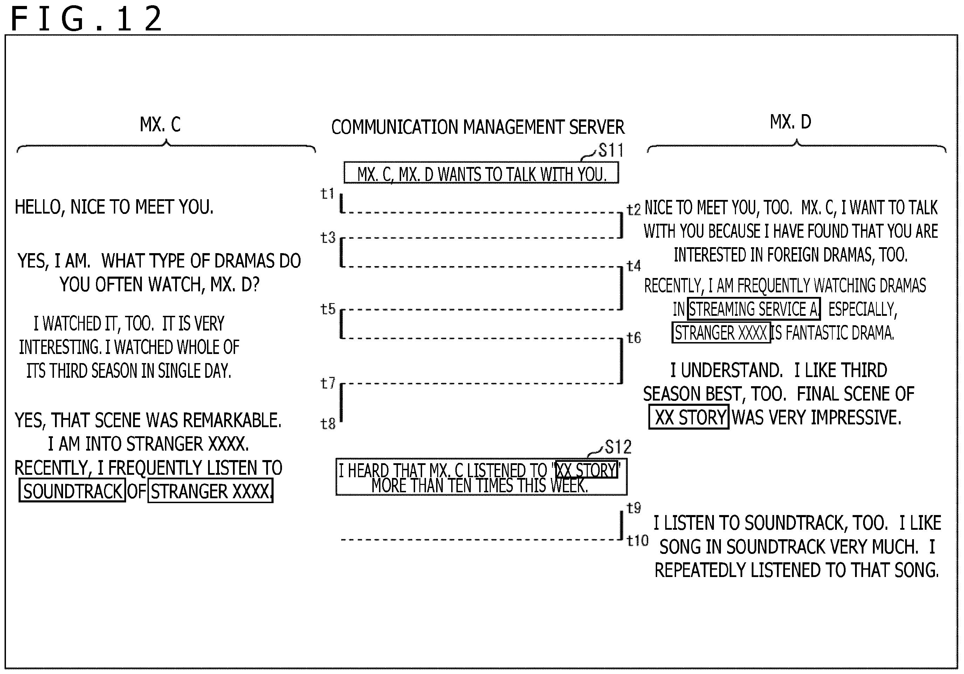

   FIG. 12 is a diagram illustrating a specific example of a conversation between users C and D.
[FIG. 13]

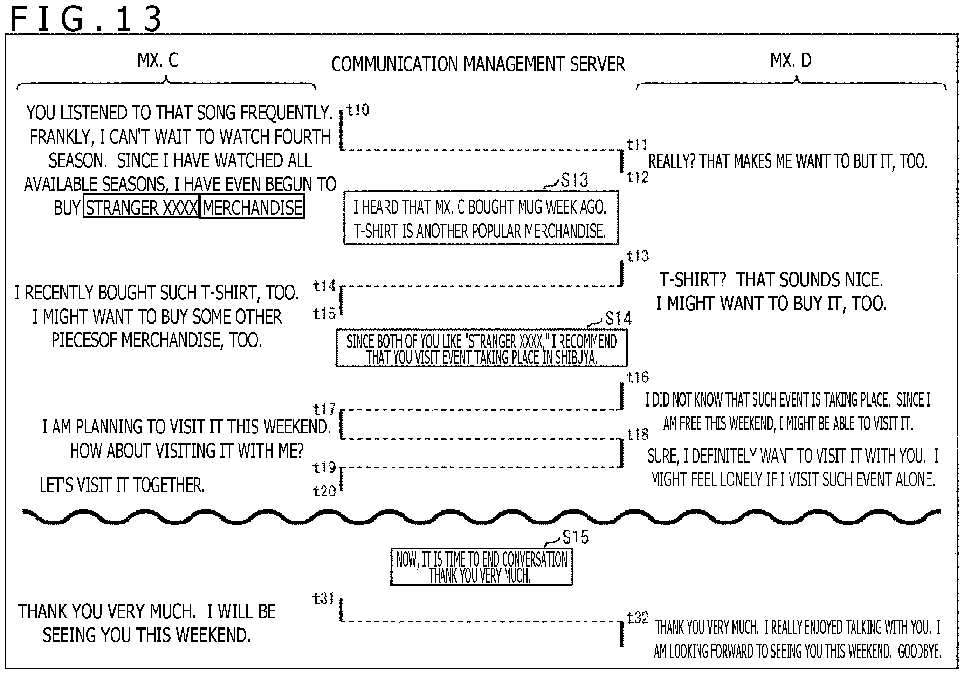

   FIG. 13 is a diagram illustrating the specific example of the conversation between the users C and D, continued from FIG. 12.
[FIG. 14]

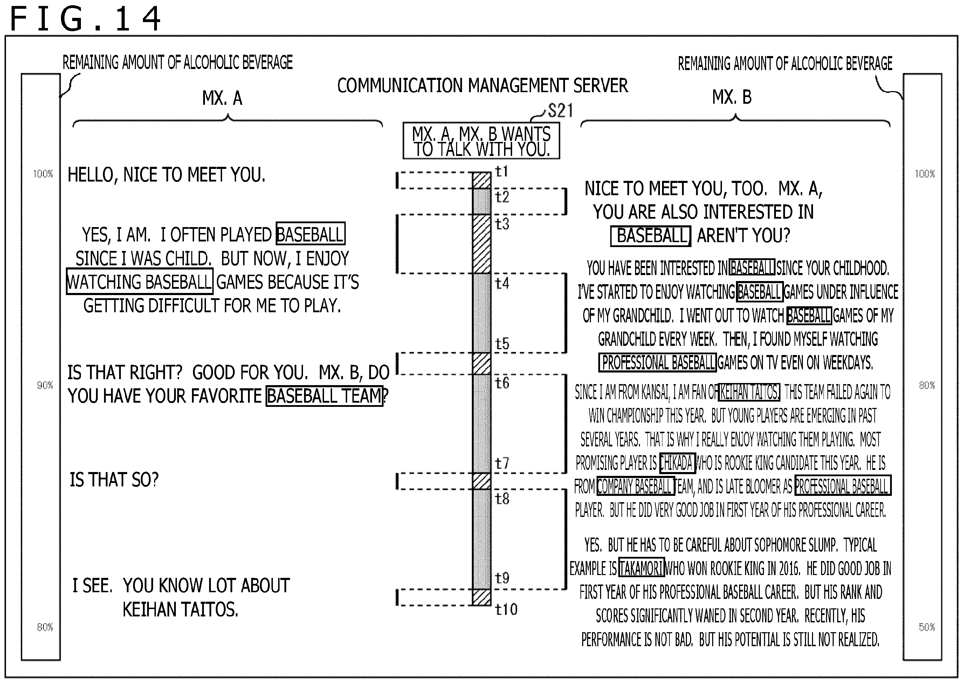

   FIG. 14 is a diagram illustrating a specific example of a conversation between the users A and B.
[FIG. 15]

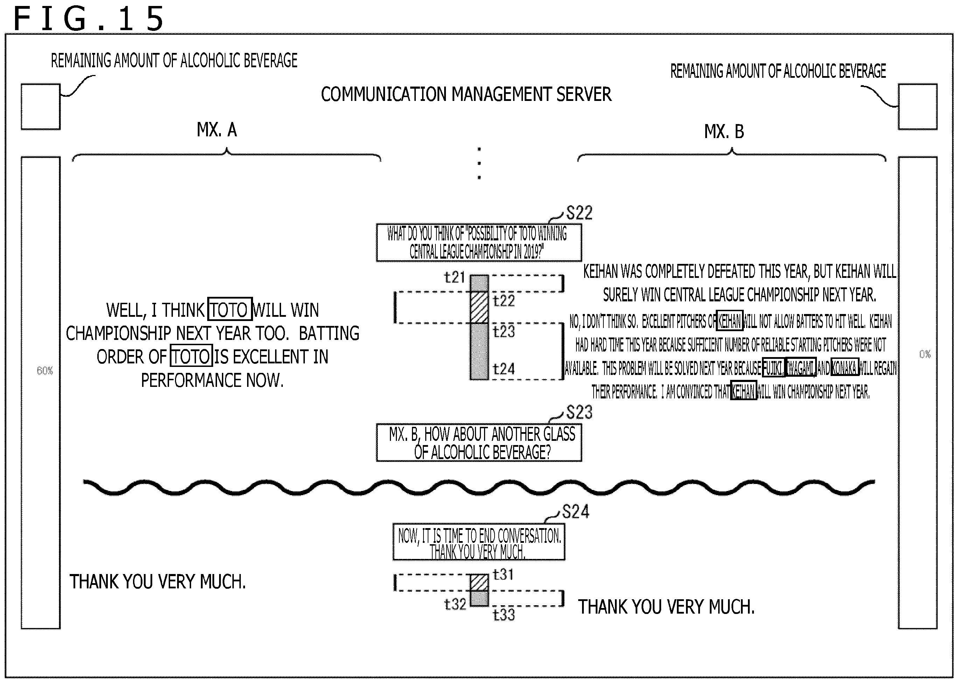

   FIG. 15 is a diagram illustrating the specific example of the conversation between the users A and B, continued from FIG. 14.
[FIG. 16]

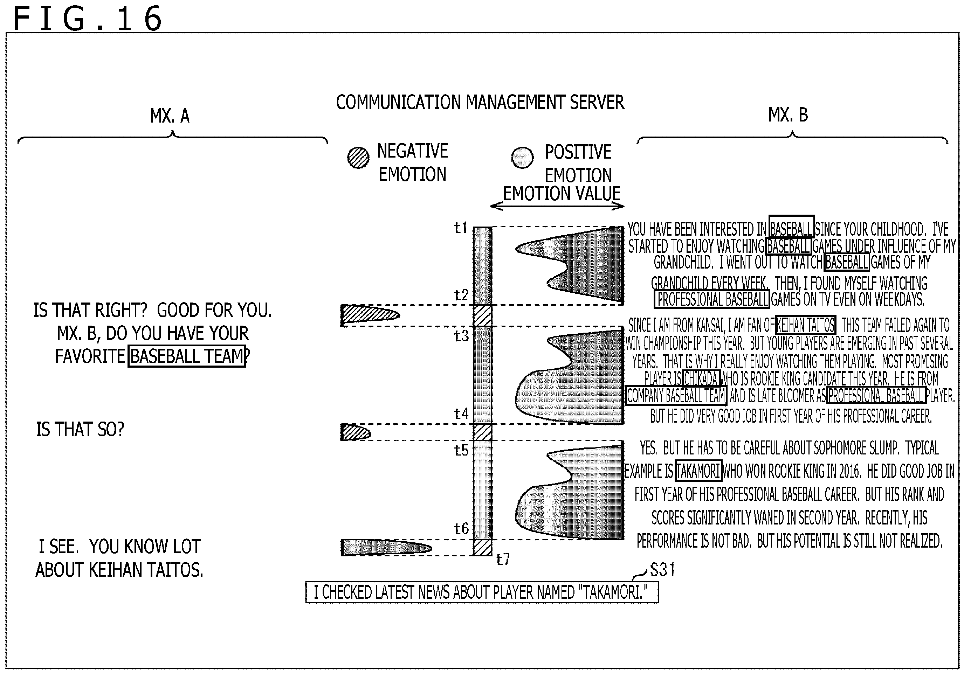

   FIG. 16 is a diagram illustrating a specific example of a conversation between the users A and B.
[FIG. 17]

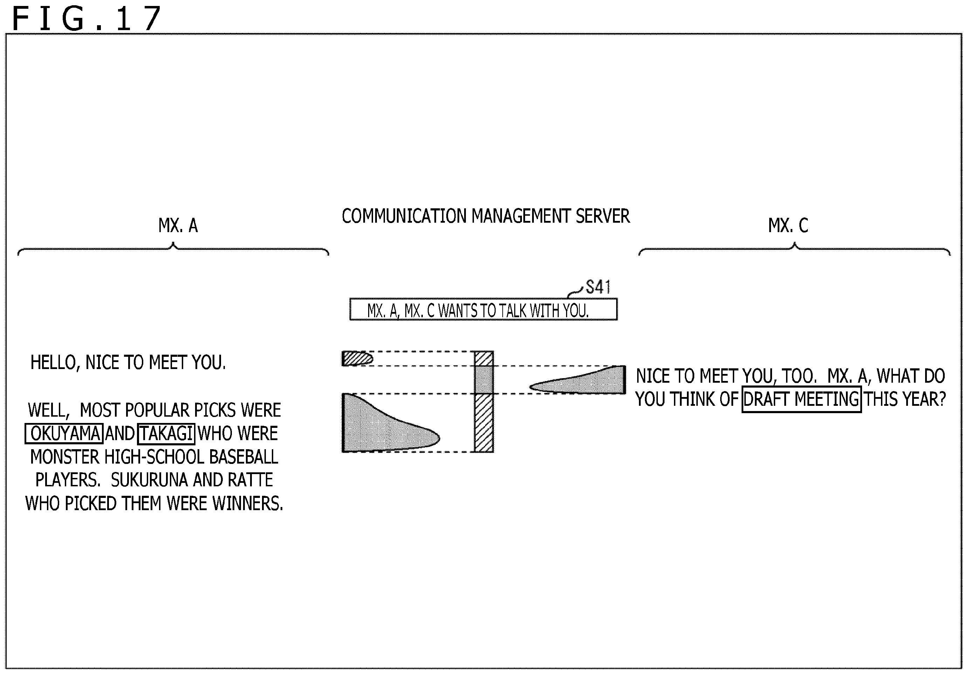

   FIG. 17 is a diagram illustrating an example of matching.
[FIG. 18]

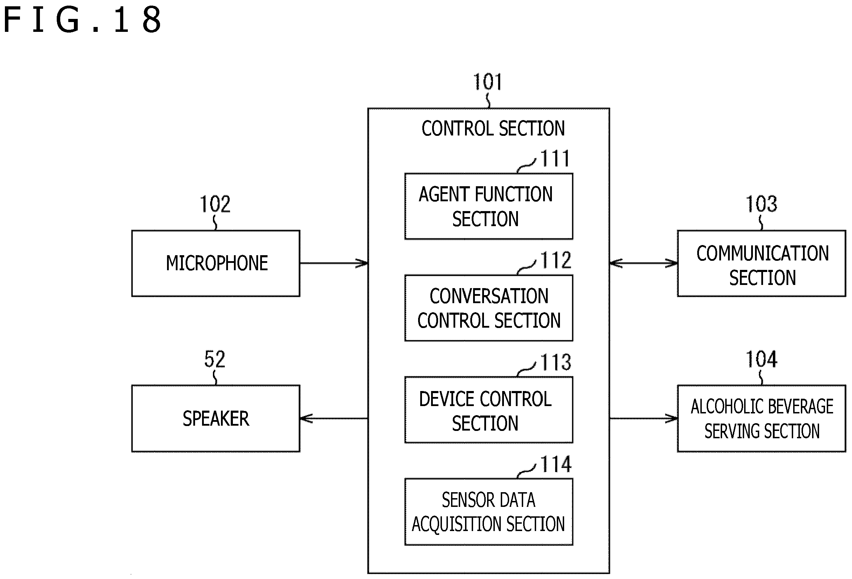

   FIG. 18 is a block diagram illustrating an example configuration of the interactive agent apparatus.
[FIG. 19]

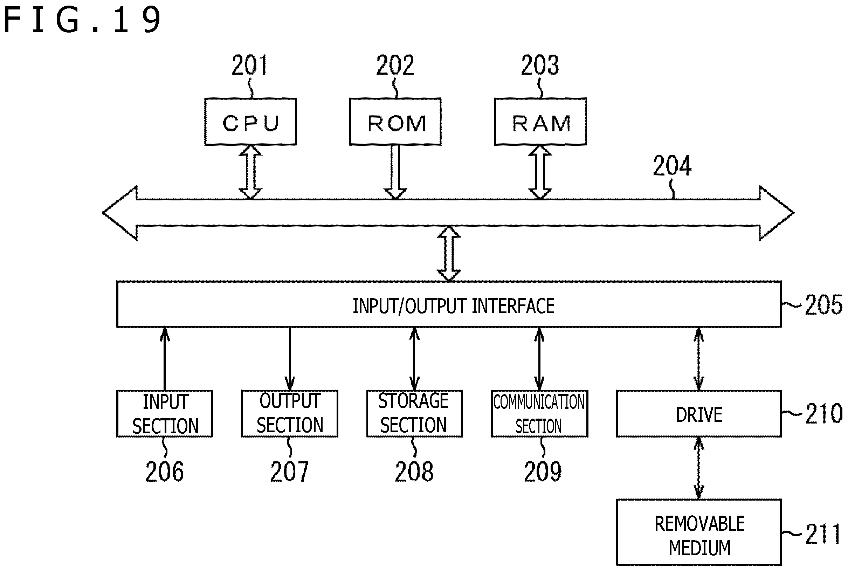

   FIG. 19 is a block diagram illustrating an example of a hardware configuration of a communication management server.
[FIG. 20]

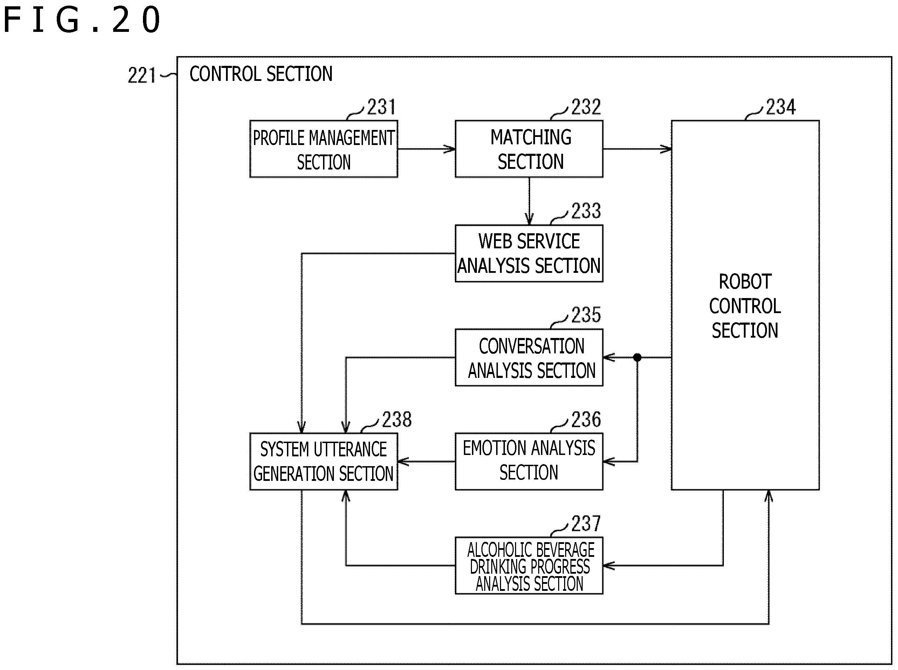

   FIG. 20 is a block diagram illustrating an example of a functional configuration of the communication management server.
[FIG. 21]

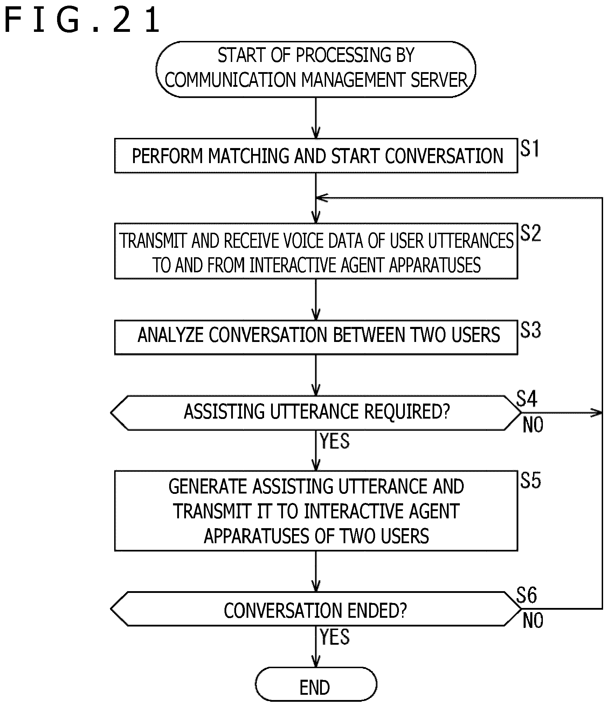

   FIG. 21 is a flowchart illustrating a process performed by the communication management server.
[FIG. 22]

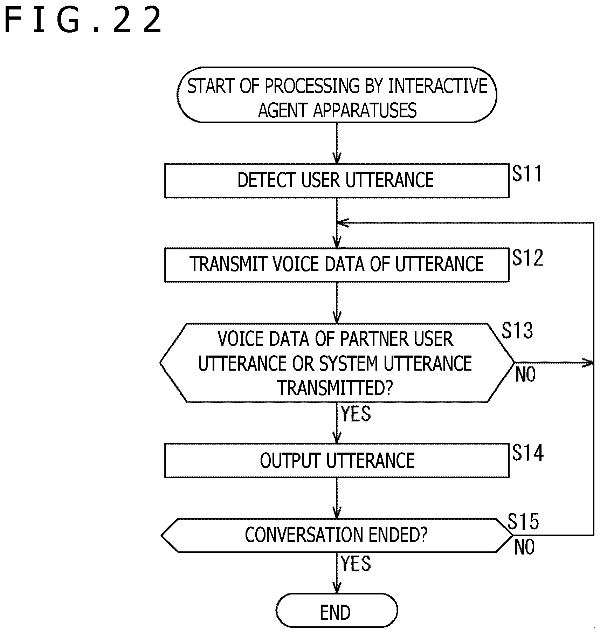

   FIG. 22 is a flowchart illustrating a process performed by the interactive agent apparatus.
[FIG. 23]

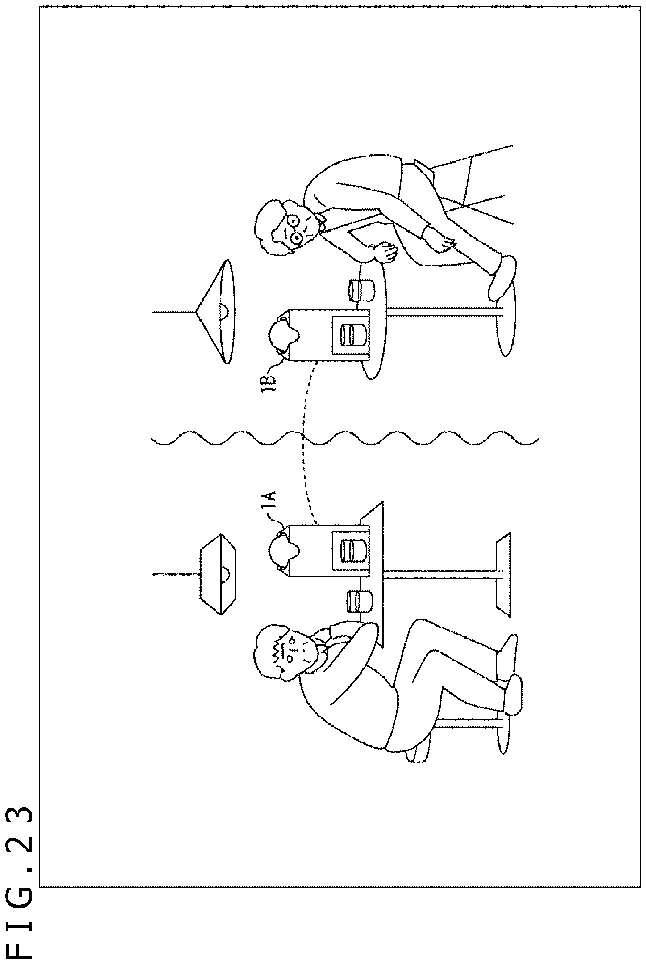

   FIG. 23 is a diagram illustrating an example in which the interactive agent apparatus is used.

### [Description of Embodiment]

### <Overview of Present Technology>

A server managing a voice communication system according to the present technology is an information processing apparatus that establishes a smooth conversation between two persons by use of a conversation assisting function based on AI (Artificial Intelligence). The conversation assisting function outputs an utterance of the system and prompts a user engaged in a conversation to generate an utterance.

For example, a period of time of an utterance of each of two persons engaged in a conversation is measured. In a case where the period of time of an utterance of one user is different from that of the other user, the system generates an utterance in order to prompt the user having a relatively short period of time of an utterance to generate an utterance. A phrase to be uttered by the system is selected from preset phases. For example, as the utterance of the system, the system outputs a phrase including an account name of a user, such as "What do you think, Mx. A?"

Further, a silence time period in a conversation between two persons is measured. In a case where the two persons remain silent for a predetermined period of time such as 10 seconds, the system generates an utterance to provide a new topic. For example, the latest article titled to represent a topic interesting to both of two users in common is extracted from a news site, and the contents related to such an article are provided as the new topic.

More specifically, the voice communication system according to the present technology is configured to be in a user-to-AI relationship of 2:1 and adapted to use AI in order to play a role of assisting the users in communicating with each other. Dedicated hardware adapted, for example, to input and output a voice is prepared and disposed in the vicinity of each user. Further, functions, for example, for confirming a conversation archive and detailed settings are supplied by a dedicated application installed in a smartphone or other mobile terminal owned by each user.

An embodiment for implementing the present technology will now be described. The description will be generated in the following order.
1. Configuration of Voice Communication System
2. Appearance Configuration of Interactive Agent Apparatus
3. Regarding Dedicated Application
4. Specific Examples of Conversations Including Assisting Utterances
5. Example Configurations of Apparatuses
6. Operations of Apparatuses
7. Others

### <Configuration of Voice Communication System>

FIG. 1 is a diagram illustrating an example configuration of a voice communication system according to an embodiment of the present technology.

The voice communication system depicted in FIG. 1 is configured such that two interactive agent apparatuses 1, namely, interactive agent apparatuses 1A and 1B, are connected to each other through a network 21. The network 21 such as the Internet has also a communication management server 11 connected thereto.

The interactive agent apparatus 1A, which is used by a user A, is installed, for example, at the home of the user A. Similarly, the interactive agent apparatus 1B, which is used by a user B, is installed, for example, at the home of the user B. Although the two interactive agent apparatuses 1 are depicted in FIG. 1, a larger number of interactive agent apparatuses 1 are actually connected to the network 21.

In the example of FIG. 1, the users A and B respectively have mobile terminals 2A and 2B, such as smartphones. The mobile terminals 2A and 2B are also connected to the network 21.

The interactive agent apparatus 1 has an interactive agent function and is thus able to establish voice communication with the users. The interactive agent apparatus 1 includes, for example, a microphone for detecting the voice of a user and a speaker for outputting the voice of another user. The agent function incorporated in the interactive agent apparatus 1 is implemented as needed when the interactive agent apparatus 1 cooperates with the communication management server 11. Various types of information are transmitted and received between the interactive agent apparatus 1 and the communication management server 11.

The agent function incorporated in the interactive agent apparatus 1 establishes a conversation between two matched users. The users A and B depicted in FIG. 1 are users matched by the communication management server 11.

The voice of the user A is collected by the interactive agent apparatus 1A, and transmitted to the interactive agent apparatus 1B through the communication management server 11. The interactive agent apparatus 1B outputs the voice of the user A, which is transmitted through the communication management server 11.

Similarly, the voice of the user B is collected by the interactive agent apparatus 1B, and transmitted to the interactive agent apparatus 1A through the communication management server 11. The interactive agent apparatus 1A outputs the voice of the user B, which is transmitted through the communication management server 11. This enables the users A and B to have a remote conversation with each other at their respective homes.

While the users A and B are engaged in a conversation, an utterance for assisting (aiding) them in conversing with each other is transmitted, as an utterance of the system, from the communication management server 11 to the interactive agent apparatus 1A and to the interactive agent apparatus 1B, and outputted respectively from the interactive agent apparatus 1A and the interactive agent apparatus 1B. Upon listening to the utterance of the system, the users A and B react to the utterance of the system as appropriate.

More specifically, the communication management server 11 has not only a function of matching two persons who have a conversation, but also the conversation assisting function of analyzing a status of the conversation between the two persons and giving an utterance for assisting them in conversing with each other according to the status of the conversation between them. The utterance outputted from the interactive agent apparatuses 1 by the communication management server 11 through the use of the conversation assisting function is hereinafter referred to as an assisting utterance as needed. The assisting utterance is a conversation assisting voice that provides assistance to a conversation.

FIG. 2 is a diagram illustrating an example output of the assisting utterance.

The upper part of FIG. 2 depicts the states of the users A and B who are actively engaged in a conversation. Although, for example, the interactive agent apparatuses 1 are not depicted in FIG. 2, an utterance of each user is transmitted from the interactive agent apparatus 1 used by the user to the interactive agent apparatus 1 used by the conversation partner and then outputted.

In a case where the conversation between the users A and B is halted as depicted in the middle part of FIG. 2, the assisting utterance is outputted from the interactive agent apparatuses 1A and 1B as depicted in the lower part of FIG. 2. In the example of FIG. 2, outputted is the assisting utterance which prompts the users A and B to converse with each other about "Baseball" that is interesting to both of the users A and B. This causes the users A and B to resume the conversation by talking about "Baseball."

As described above, the communication management server 11 analyzes the status of a conversation, for example, to check whether the conversation is halted, and outputs the assisting utterance according to the result of the analysis. The conversation assisting function is implemented by AI prepared for the communication management server 11. The communication management server 11 is managed, for example, by a manufacturer of the interactive agent apparatuses 1.

FIG. 3 is a diagram illustrating an example of AI that implements the conversation assisting function.

As depicted in the upper part of FIG. 3, a conversation assisting AI is prepared in the communication management server 11. The conversation assisting AI is an AI that implements the conversation assisting function. The conversation assisting AI is an inference model including, for example, a neural network that inputs the status of a conversation and personal information regarding each of the users A and B, such as the information regarding personal preferences, and then outputs the contents to be provided as a topic. The status of the conversation includes, for example, a period of time of each of utterance and silence (a period of time during which the conversation is halted) of each of the users A and B.

The inference model forming the conversation assisting AI is generated by performing machine learning through the use, for example, of information indicating the status of various conversations, personal information regarding various users, and information regarding news articles obtained from a news site.

As indicated by broken lines #1 and #2, the interactive agent apparatus 1A and the interactive agent apparatus 1B are both connected to the conversation assisting AI. On the basis of information transmitted from the interactive agent apparatus 1A and the interactive agent apparatus 1B, the conversation assisting AI analyzes the status of the conversation between two persons, and exercises the conversation assisting function as needed to provide a topic.

It should be noted that, as depicted in the lower part of FIG. 3, the users A and B input, in advance, profile information, such as interesting topics (events and topics for conversation), by use of their own mobile terminals 2 on which the dedicated application is installed. When the users A and B activate the dedicated application and perform a login operation, for example, by inputting account information, the profile information regarding users A and B, which is managed by the communication management server 11 in association with the account information, is identified.

The conversation between two persons using the above-described conversation assisting function is conducted in a situation where the two users are drinking alcoholic beverages prepared by the interactive agent apparatuses 1 at their own homes. More specifically, the interactive agent apparatus 1 has a function of serving alcoholic beverages according to a user request. The assisting utterance is outputted according to the status of a conversation that is held after the alcoholic beverages are served to the two users by their respective interactive agent apparatuses 1.

The users A and B have a conversation with each other on a one-to-one basis while drinking the alcoholic beverages prepared by the interactive agent apparatuses 1. The assisting utterance, which is an utterance of a third party, is inserted, as needed according to the status of the conversation, into the conversation conducted on the one-to-one basis between the users A and B. Therefore, the resulting situation is similar to a case where a bartender in front of the users A and B joins the conversation at an appropriate timing as depicted in FIG. 4.

The users A and B receive support provided by the assisting utterance to have a conversation while drinking alcoholic beverages, and are able to smoothly communicate with each other.

It should be noted that FIG. 4 depicts a situation where the users A and B are sitting next to each other. In reality, however, the users A and B are at their own homes and talking to the interactive agent apparatuses 1. The interactive agent apparatuses 1 creating a feeling of being in a bar by playing the role of a bartender who joins a conversation conducted on the one-to-one basis at an appropriate timing can also be referred to as a bartender robot.

### <Appearance of Interactive Agent Apparatus>

FIG. 5 is an enlarged perspective view illustrating the appearance of the interactive agent apparatus 1.

As depicted in FIG. 5, the interactive agent apparatus 1 has a housing 51 that is shaped like a vertically-long rectangular parallelepiped having a gradually inclined top surface. A recess section 51A is formed in the top surface of the housing 51. As indicated by an arrow in FIG. 6, a bottle 61 filled with whisky or other alcoholic beverage is mounted in the recess section 51A.

Further, a rectangular opening 51B is formed in the lower front part of the housing 51. The opening 51B is used as the outlet of a glass 62. When the glass 62 is placed in the opening 51B and an alcoholic beverage is requested by a user, the alcoholic beverage in the bottle 61 is poured into the glass 62. A server mechanism is additionally provided in the housing 51 in order to automatically pour the alcoholic beverage into the glass 62.

In a case where the bottle 61 is emptied, the user is able to continuously use the interactive agent apparatus 1 by mounting a newly delivered bottle 61 in the recess section 51A. For example, an alcoholic beverage subscription service for periodic delivery of the bottle 61 is made available as a service for a user of the interactive agent apparatus 1.

An inlet, for example, for ice and a mixer such as water and carbonated water is formed in a side surface of the housing 51. By making a voice request to specify the way of preparing an alcoholic beverage, the user is able to try variously prepared alcoholic beverages, such as "straight," "on the rocks," and "with soda." Recipe data is stored in the interactive agent apparatus 1 and used to control the server mechanism so as to reproduce the manner in which a bartender pours alcoholic beverages into a glass.

### <Regarding Dedicated Application>

As mentioned earlier, the dedicated application for the voice communication system is installed in each mobile terminal 2. The dedicated application is prepared, for example, by a manufacturer of the interactive agent apparatus 1.

The user operates the dedicated application in order to register the profile information such as age, address, and personal preferences. The registered profile information is transmitted to the communication management server 11 and managed in association with the user's account information.

FIGS. 7 and 8 are diagrams illustrating example screens of the dedicated application.

An alcoholic beverage drinking record tab T1 and a conversation record tab T2 are prepared for screens of the dedicated application. In a case where the alcoholic beverage drinking record tab T1 is tapped, an alcoholic beverage drinking record appears on the screen as depicted in FIG. 7. In the example of FIG. 7, information indicating, for example, the date and time of alcoholic beverage drinking, the amount of such drinking, and the way of preparing an alcoholic beverage is displayed as the alcoholic beverage drinking record.

Meanwhile, in a case where the conversation record tab T2 is tapped, a conversation record appears on the screen as depicted in FIG. 8. In the example of FIG. 8, pieces of information indicating such as the name of a conversation partner, the date and time of a conversation, and tags representing the contents of the conversation are displayed as the conversation record.

A function of displaying the above-mentioned alcoholic beverage drinking record and conversation record is implemented on the basis of information managed by the communication management server 11. The dedicated application communicates with the communication management server 11, and displays various types of screens according to information transmitted from the communication management server 11.

### <Specific Examples of Conversations including Assisting Utterances>

Specific examples of conversations held between two persons in the voice communication system will now be described.

1. Assisting Utterances on Basis of Status of Conversation

### (1) Assisting Utterances on Basis of Period of Time of Utterance

For example, in a case where a period of time of utterance of the user B is longer than a period of time of utterance of the user A, a fixed phrase is used to output the following assisting utterances in order to provide the user A with a topic of the conversation.
"What do you think, Mx. A?" (an utterance for asking for Mx. A's views on the talk of Mx. B)
"What do you like, Mx. A?" (an utterance for addressing a question to Mx. A)
"What are you doing recently, Mx. A?" (an utterance for changing the topic of the conversation)

The above assisting utterances are outputted in a case where the period of time of utterance of the user A is significantly different from the period of time of utterance of the user B, or more specifically, the period of time of utterance of the user B is more than 80% of the total period of time of utterance. It should be noted that, in the specific examples of assisting utterances, "Mx. A" denotes the user A while "Mx. B" denotes the user B.

### (2) Assisting Utterances on Basis of Silence Time Period

In a case where neither of the two users have talked for a predetermined period of time, such as 10 seconds, the following assisting utterances are outputted so as to provide a topic of the conversation.
"Do you know about (a news title)?" (an utterance for continuing with or delving into the present topic)
"I am interested in (a news title)" (an utterance for providing information)

The above assisting utterances are generated by searching websites for news articles related to a word most frequently used in the most recent 10-minute conversation and causing the assisting utterances to include, for example, the titles of the latest news articles highlighted in news sites.

FIGS. 9 to 11 are diagrams illustrating specific examples of a conversation between the users A and B.

In FIGS. 9 to 11, the utterances of the user A are depicted in the left column while the utterances of user B are depicted in the right column. The utterances of the system (system utterances), which are outputted from the interactive agent apparatus 1 under the control of the communication management server 11, are depicted in the center column. The system utterances include the above-described assisting utterances. The same holds true for later-reference drawings illustrating other specific examples of conversations.

The conversation between the users A and B starts when, for example, a system utterance S1 such as "Mx. A, Mx. B wants to talk with you" is outputted from the interactive agent apparatus 1A, and the user A, in response to the system utterance S1, agrees to have a conversation with the user B.

The system utterance S1 is used to notify the user A that the user B wants to start conversing with the user A, who is selected as a conversation partner. The system utterance S1 is outputted when the user A is selected by the user B, for example, from conversation partner candidates found to be a match by the communication management server 11.

Matching by the communication management server 11 is performed, for example, on the basis of interesting topics, such as "economy" and "entertainment ," which are preregistered by individual users. Alternatively, matching may be performed on the basis of information other than the preregistered topics, such as text data that is inputted at the time of conversation partner selection. This enables the individual users to select, as a conversation partner, a user who is interested in the same topic.

In the example of FIG. 9, the utterance "Hello, nice to meet you" is generated from the user A during an interval between time t1 and time t2, and then, the utterance "Nice to meet you, too, Mx. A, you are also interested in baseball, aren't you?" is generated from the user B during an interval between time t2 and time t3. Voice data of the user A is transmitted to the interactive agent apparatus 1B from the interactive agent apparatus 1A through the communication management server 11, and outputted from the interactive agent apparatus 1B as the utterance of the user A. Meanwhile, voice data of the user B is transmitted to the interactive agent apparatus 1A from the interactive agent apparatus 1B through the communication management server 11, and outputted from the interactive agent apparatus 1A as the utterance of the user B.

In the communication management server 11, the period of time of utterance of the user A and the period of time of utterance of the user B are each measured as the status of utterance of the user A and of the user B. Within a strip-shaped portion in the center of FIG. 9, a hatched section represents the period of time of utterance of the user A while a pale-colored section represents the period of time of utterance of the user B. The same applies to the other drawings.

Further, the communication management server 11 extracts keywords from the utterances of the users A and B as the status of utterance of the user A and of the user B. Words surrounded with a frame in FIG. 9 are extracted as the keywords by the communication management server 11.

At and after time t3, the users A and B alternately generate utterances and continue to have a conversation between the users A and B. In the examples of FIGS. 9 and 10, the user B talks for a longer period of time than the user A.

In a case where the difference between the period of time of utterance of the user A and the period of time of utterance of the user B is greater than a threshold, a system utterance S2 such as "What do you like, Mx. A?" is outputted at time t12 as indicated in FIG. 10. The system utterance S2 is an assisting utterance that is outputted by use of a fixed phrase in order to provide the user A with a topic of the conversation. For example, in a case where the period of time of utterance of the user B is more than 80% of the total period of time of utterance of the two users, the above assisting utterance is outputted.

Voice data of the system utterance S2 is transmitted from the communication management server 11 to both the interactive agent apparatus 1A and the interactive agent apparatus 1B, and outputted from both the interactive agent apparatus 1A and the interactive agent apparatus 1B as an assisting utterance. Upon hearing the system utterance S2, which provides the user A with a topic of the conversation, the user A generates an utterance such as "Well, I like Tokyo Sukuruna Hayabusas" during an interval between time t13 and time t14.

The communication management server 11 is able to establish smooth communication between the users A and B by providing the user A, who has a relatively short period of time of utterance, with a chance to talk and adjusting the period of time of utterance of the user A with the period of time of utterance of the user B.

Upon hearing the assisting utterance, the users A and B alternately generate an utterance to converse with each other during an interval between time t14 and time t17.

In a case where the users A and B remain silent to halt their conversation for a predetermined period of time, such as 10 seconds, as depicted in the upper part of FIG. 11, a system utterance S3 such as "What do you think of 'the possibility of Toto winning the Central League championship in 2019?'" is outputted. The system utterance S3 is an assisting utterance that is outputted after continued silence in order to provide the two users with a topic of the conversation.

As described above, the communication management server 11 additionally measures, as the status of utterance of user A and of user B, for example, a period of time during which users A and B remain silent.

After the system utterance S3 is outputted to provide the users A and B with a topic of the conversation, the user B generates an utterance such as "Keihan was completely defeated this year, but Keihan will surely win the Central League championship next year" during an interval between time t21 and time t22.

The communication management server 11 is able to establish smooth communication between two silent users by prompting them to generate an utterance to converse with each other.

Upon hearing the assisting utterance, the users A and B alternately generate an utterance during an interval between time t22 and time t24.

For example, in a case where a predetermined period of time, such as one hour, elapses, a system utterance S4 such as "Now, it is time to end the conversation, thank you very much" is outputted as depicted in the lower part of FIG. 11. Upon hearing the system utterance S4, the users A and B appreciate each other and end their conversation.

As described above, the communication management server 11 analyzes the status of the conversation between the users A and B while they have the conversation with each other. Assisting utterances are then outputted as needed according to the status of the conversation. This establishes smooth communication between the users A and B.

### 2. Assisting Utterances Associated with Web Services

In a case where a word extracted from the conversation between the users is associated with a coordinated Web service, an assisting utterance containing information indicative, for example, of the user's usage situation of the coordinated Web service is generated to the users as a new topic.

### (1) Coordination with Music Streaming Service

On the basis of information regarding a song which a user frequently listens to, an assisting utterance is outputted to provide information related to the contents of a conversation as a topic of the conversation. The information regarding the song the user frequently listens to is, for example, acquired by the dedicated application from a server providing a music streaming service or acquired from an application that is installed in the mobile terminal 2 by the user to use the music streaming service.

### (2) Coordination with Shopping Service

On the basis of information regarding a user's shopping history, an assisting utterance is outputted to provide information related to the contents of a conversation as a topic of the conversation. The information regarding the user's shopping history is, for example, acquired by the dedicated application from a server managing a shopping site or acquired from an application that is installed in the mobile terminal 2 by the user to do shopping.

### (3) Coordination with Event Information Acquired from Web

On the basis of information acquired from the Web, an assisting utterance is outputted to provide information regarding an event related to the contents of a conversation as a topic of the conversation.

FIGS. 12 and 13 are diagrams illustrating a specific example of a conversation between the users C and D.

As depicted in FIG. 12, the conversation between the users C and D starts in a similar manner to the conversation between the users A and B that has been described with reference to FIG. 9. The users C and D are found to be a matching conversation partner for each other because they are both interested in "foreign dramas" in common.

The users C and D alternately generate an utterance during an interval between time t1 and time t7. Voice data of a user C is transmitted from the interactive agent apparatus 1C, which is the interactive agent apparatus 1 used by the user C, to the interactive agent apparatus 1D through the communication management server 11, and outputted from the interactive agent apparatus 1D as the utterance of the user C. The interactive agent apparatus 1D is the interactive agent apparatus 1 used by a user D. Meanwhile, voice data of the user D is transmitted to the interactive agent apparatus 1C from the interactive agent apparatus 1D through the communication management server 11, and outputted from the interactive agent apparatus 1C as the utterance of the user D.

For example, while talking about a movie scene during an interval between time t6 and time t7, the user D generates the utterance "I understand, I like the third season best, too, the final scene of XX story was very impressive." Further, during an interval between time t7 and time t8, the user C generates the utterance "Yes, that scene was remarkable, I am into Stranger XXXX, recently, I frequently listen to the soundtrack of Stranger XXXX."

The communication management server 11 analyzes the contents of the conversation, and detects a word indicating the name of the soundtrack of a movie that the user C frequently listens to. Here, it is assumed that the user C listens to the soundtrack of a movie by use of a music streaming service that is able to coordinate with the communication management server 11.

After the word indicating the name of the soundtrack that the user C listens to is detected, a system utterance S12 such as "I heard that Mx. C listened to "XX story" more than ten times this week" is outputted. The system utterance S12 is an assisting utterance that is generated on the basis of information regarding a song that the user C listens to, and outputted to provide information related to the contents of the conversation as a topic of the conversation.

Voice data of the system utterance S12 is transmitted from the communication management server 11 to both the interactive agent apparatus 1C and the interactive agent apparatus 1D, and outputted from both the interactive agent apparatus 1C and the interactive agent apparatus 1D as an assisting utterance. Upon hearing the system utterance S12, which provides the user D with a topic of the conversation, user D generates an utterance such as "I listen to the soundtrack, too, I like the song in the soundtrack very much and repeatedly listen to that song" during an interval between time t9 and time t10.

The communication management server 11 is able to establish smooth communication between the users C and D by providing the user D with information regarding the user C for starting a conversation and thus prompting the user D to generate an utterance.

Upon hearing the assisting utterance, the users C and D alternately generate an utterance to converse with each other at and after time t10 as depicted in FIG. 13.

For example, as a result of analysis of an utterance of the user C generated during an interval between time t10 and time t11, a system utterance S13 such as "I heard that Mx. C bought a mug a week ago, a shirt is another popular merchandise" is outputted at time t12 after detection of a word indicating the name of a product bought by the user C. The system utterance S13 is an assisting utterance that is generated on the basis of information regarding a user C's shopping history and outputted to provide information related to the contents of the conversation as a topic of the conversation.

Further, after the preferences of the users C and D are identified as a result of analysis of the contents of the conversation, a system utterance S14 such as "Since both of you like "Stranger XXXX," I recommend that you visit an event taking place in Shibuya" is outputted at time t14. The system utterance S14 is an assisting utterance that is generated on the basis of information acquired from the Web and outputted to provide information regarding an event related to the contents of the conversation as a topic of the conversation.

Upon hearing the above-described assisting utterance, the users C and D continue to converse with each other, and then end their conversation by saying goodbye as depicted in the lower part of FIG. 13.

As described above, while the users C and D converse with each other, the communication management server 11 analyzes the contents of their conversation, and acquires information related to the contents of the conversation according to the usage situation of a Web service. Further, an assisting utterance is outputted to provide information acquired on the basis of the usage situation of the Web service as a topic of the conversation. This establishes smooth communication between the users C and D.

### 3. Assisting Utterances According to Remaining Amount of Alcoholic Beverage

The following assisting utterances are outputted according to the remaining amount of alcoholic beverage that a user is drinking.
(1) Assisting utterance for ending a conversation (a case where alcoholic beverages are drunk up by both of two users)
(2) Assisting utterance for offering another glass of alcoholic beverage (a case where a glass of alcoholic beverage is drunk up by one user while more than half a glass of alcoholic beverage is left for the other user)

For example, the glass 62 used by the users is provided with a sensor for detecting the remaining amount of alcoholic beverage. Information indicating the remaining amount of alcoholic beverage, which is detected by the sensor, is acquired by the interactive agent apparatus 1 and transmitted to the communication management server 11.

Alternatively, the remaining amount of alcoholic beverage may be detected by analyzing an image captured by a camera attached to the interactive agent apparatus 1. The image analysis for detecting the remaining amount of alcoholic beverage may be performed by the interactive agent apparatus 1 or performed by the communication management server 11.

FIGS. 14 and 15 are diagrams illustrating a specific example of a conversation between the users A and B converse with each other.

The conversation depicted in FIG. 14 is the same as the conversation between the users A and B that is described with reference to FIG. 9. The time series of the remaining amount of alcoholic beverage drunk by the user A is depicted at the left end of FIG. 14. Further, the time series of the remaining amount of alcoholic beverage drunk by the user B is depicted at the right end of FIG. 14. The remaining amount of alcoholic beverage is identified by the communication management server 11 according to information transmitted respectively from the interactive agent apparatuses 1 used by the users A and B.

In the example of FIG. 14, at time t10, when the utterance of the user A ends, the remaining amount of alcoholic beverage of the user A is 80%, whereas the remaining amount of alcoholic beverage of the user B is 50%.

At and after time t10, the users A and B alternately generate an utterance as depicted in FIG. 15. In the example of FIG. 15, a system utterance S22 that is the same as the assisting utterance described with reference to FIG. 11 is outputted after a predetermined period of time of silence, such as 10 seconds.

At time t24, when an utterance is generated by the user B, the remaining amount of alcoholic beverage of the user B is 0% as indicated at the right end of FIG. 15. In this case, a system utterance S23 such as "Mx. B, how about another glass of alcoholic beverage?" is outputted at time t24. The system utterance S23 is an assisting utterance that is generated to offer another glass of alcoholic beverage.

Voice data of the system utterance S23 is transmitted from the communication management server 11 to both the interactive agent apparatus 1A and the interactive agent apparatus 1B, and outputted from both the interactive agent apparatus 1A and the interactive agent apparatus 1B as an assisting utterance. Upon hearing the system utterance S23, the user B is able to request another glass of alcoholic beverage and have it prepared by the interactive agent apparatus 1B. It should be noted that, at time t24, the remaining amount of alcoholic beverage of the user A is 60%, that is, more than half a glass of alcoholic beverage is left for the user A, as indicated at the left end of FIG. 15.

In response to a situation where a glass of alcoholic beverage is drunk up by only one user, the communication management server 11 is able to establish smooth communication between the users A and B by offering another glass of alcoholic beverage to that user with the empty glass and thus adjusting the alcoholic beverage drinking progress of two users. In general, a user who has drunk up a glass of alcoholic beverage is unable to stop thinking about the empty glass and to concentrate on a conversation. However, the communication management server 11 is able to avoid the occurrence of such a situation.

The conversation between users A and B depicted in FIG. 15 ends according to an assisting utterance that is outputted, for example, at a timing at which the glasses of the users A and B are emptied.

### 4. Examples of Uses of Emotion Analysis Results

The emotion of a user is analyzed on the basis of a user's utterance, and the following processes are performed according to the results of emotion analysis. An emotion analysis function (emotion analysis engine) is incorporated in the communication management server 11. The emotion of the user is analyzed on the basis of, for example, the length of time the user talks, the length of time the user listens, and a keyword included in the user's utterance.
(1) An assisting utterance is outputted so as to provide a user having a negative emotion with a topic that will possibly give a positive emotion to the user. For example, a topic about a subject interesting to the user having a negative emotion is provided by the assisting utterance.
(2) According to the personality and preferences of a user that are identified as a result of emotion analysis, the user is matched with another user who will be an optimal conversation partner. In this case, the personality and preferences of the user are analyzed, for example, on the basis of an utterance generated immediately before an emotion change from negative to positive. The personality and preferences of the user are analyzed on the basis of an emotional change during a conversation, and at the time of next conversational matching, the user is matched with another user who is likely to give a positive emotion to both of the two users.
(3) An IoT (Internet of Things) device is controlled on the basis of the result of emotion analysis. In addition to the interactive agent apparatus 1, the IoT device controllable by the interactive agent apparatus 1 is installed in a space where a user is present. For example, an LED illumination device capable of adjusting brightness and color temperature is installed as the IoT device.

The communication management server 11 controls the operation of the IoT device through the interactive agent apparatus 1 by transmitting a control command to the interactive agent apparatus 1. Operational control of the IoT device by the communication management server 11 may be exercised through the mobile terminal 2 by transmitting a control command to the mobile terminal 2.

FIG. 16 is a diagram illustrating a specific example of a conversation between the users A and B.

The conversation depicted in FIG. 16 is basically the same as the conversation between the users A and B that has been described with reference to FIG. 9. Waveforms depicted to the right of the utterances of the user A represent the emotion of the user A during the conversation. Waveforms depicted to the left of the utterances of the user B represent the emotion of the user B during the conversation. Hatched waveforms representative of emotions indicate a negative emotion, whereas pale-colored waveforms representative of emotions indicate a positive emotion. The amplitude of each waveform represents an emotion value indicating the intensity of emotion.

In the example of FIG. 16, the user B generates an utterance during an interval between time t1 and time t2, during an interval between time t3 and time t4, and during an interval between time t5 and time t6. The emotion of the user B is positive during each of such intervals.

Meanwhile, the user A generates an utterance during each of short intervals, namely, an interval between time t2 and time t3, an interval between time t4 and time t5, and an interval between time t6 and time t7. The emotion of the user A is negative during the interval between time t2 and time t3 and during the interval between time t4 and time t5. The emotion of the user A is positive during the interval between time t6 and time t7.

On the basis of each utterance, the communication management server 11 analyzes, for example, the personality and preferences of a user as well as the status of the conversation. The estimation of characteristics of the user B indicates, for example, that the user B utters for a long period of time, listens for a short period of time, and constantly has a positive emotion. The estimation of characteristics of user B further indicates that user B is fond of talking and interested, for example, in a topic of "baseball."

Meanwhile, the estimation of characteristics of the user A indicates, for example, that the user A utters for a short period of time and listens for a long period of time. Further, the emotion of the user A changes to a positive one when the user A listens to the utterance of the user B during the interval between time t5 and time t6. Therefore, it is estimated that the user A is interested in a baseball player named "Takamori," which name is contained in the utterance of the user B as a keyword.

In the above case, a system utterance S31 such as "I checked the latest news about the player named "Takamori" is outputted at time t7. The system utterance S31 is an assisting utterance for providing a topic of the conversation that will possibly give a positive emotion. After the system utterance S31 is outputted, a system utterance is outputted to convey the contents of the latest news article found as a result of search.

In the manner described above, the communication management server 11 is able to change the emotion of user A to a positive one and to subsequently establish smooth communication between the users A and B.

FIG. 17 is a diagram illustrating an example of matching.

In this example, the basic characteristics of the user A, which are estimated by the communication management server 11 according to the history of the conversations with various users, are assumed to indicate that the user A is not good at listening to others but is likely to actively participate in a conversation about a topic interesting to the user A.

Further, it is assumed, on the basis of the contents of an utterance generated at the time of the above-mentioned emotional change, that the user A is interested in some specific topics among those related to the professional baseball, such as "rookie king," "draft," and "Koshien."

In the above case, main points are talked about in a summary manner as depicted in FIG. 17, so that each utterance is relatively short. Accordingly, matching is performed with respect to the user C who is interested in the training of professional baseball players. Matching between the users A and C is performed according to the personalities and preferences of the users A and C, which are estimated, for example, on the basis of the emotion of each user in a conversation.

The conversation between the users A and C starts when, for example, a system utterance S41 such as "Mx. A, Mx. C wants to talk with you" is outputted from the interactive agent apparatus 1A and, upon hearing the system utterance S41, the user A agrees to start a conversation with the user C.

In the manner described above, the communication management server 11 is able to perform matching with respect to an optimal user according to the personalities and preferences of users. The communication management server 11 retains information regarding user combinations that are possibly optimal.

It should be noted that LED illumination device control on the basis of the result of emotion analysis is exercised so as to adjust for brighter light in a case where the contents of a conversation are positive. Further, in a case where the contents of a conversation are negative, LED illumination device control is exercised to adjust for subdued dim light. For example, the contents of conversations about hobbies, families, or love affairs are assumed to be positive, whereas the contents of conversations about consultations, worries, or funerals are assumed to be negative.

In the manner described above, the communication management server 11 is able to adjust the environment around users according to the contents of conversation.

### <Example Configurations of Apparatuses>

Configurations of the apparatuses included in the voice communication system depicted in FIG. 1 will now be described.

### - Configuration of Interactive Agent Apparatus 1

FIG. 18 is a block diagram illustrating an example configuration of the interactive agent apparatus 1.

The interactive agent apparatus 1 is configured such that a speaker 52, a microphone 102, a communication section 103, and an alcoholic beverage serving section 104 are connected to a control section 101.

The control section 101 includes a CPU (Central Processing Unit), a ROM (Read Only Memory), and a RAM (Random Access Memory). The control section 101 controls the overall operation of the interactive agent apparatus 1 by allowing the CPU to execute a predetermined program.

The control section 101 executes a predetermined program to implement an agent function section 111, a conversation control section 112, a device control section 113, and a sensor data acquisition section 114.

The agent function section 111 implements the agent function of the interactive agent apparatus 1. For example, the agent function section 111 executes various types of tasks requested by the voice of a user, and presents the result of task execution to the user by a synthesized voice. For example, the agent function section 111 executes various types of tasks for checking weather forecasts and preparing an alcoholic beverage. The agent function is implemented as needed by communicating with an external server such as the communication management server 11.

The conversation control section 112 controls a conversation between the user and another user selected as a conversation partner. For example, the conversation control section 112 controls the communication section 103 so as to transmit the user's voice data, which is supplied from the microphone 102, to the communication management server 11. The voice data transmitted to the communication management server 11 is transmitted to the interactive agent apparatus 1 used by the user acting as the conversation partner.

Further, in a case where the communication section 103 receives the voice data of the user acting as the conversation partner, which is transmitted from the communication management server 11, on the basis of the voice data supplied from the communication section 103, the conversation control section 112 causes the speaker 52 to output the utterance of the user acting as the conversation partner.

In a case where the communication section 103 receives the voice data of a system utterance transmitted from the communication management server 11, on the basis of the voice data supplied from the communication section 103, the conversation control section 112 causes the speaker 52 to output the system utterance.

The device control section 113 controls the communication section 103 so as to transmit a control command to an external device targeted for control and thus control the operation of the external device. On the basis of information transmitted from the communication management server 11, the device control section 113 exercises control, for example, of an IoT device according to a user's emotion mentioned earlier.

The sensor data acquisition section 114 controls the communication section 103 so as to receive sensor data transmitted from a sensor attached to the glass 62. The sensor data indicating, for example, the remaining amount of alcoholic beverage is transmitted from the sensor attached to the glass 62. The sensor data acquisition section 114 transmits information indicative of the remaining amount of alcoholic beverage to the communication management server 11. The sensor data acquisition section 114 functions as a detection section detecting the remaining amount of alcoholic beverage of a user according to the sensor data transmitted from the sensor attached to the glass 62.

The microphone 102 detects a user's utterance, and outputs the voice data of the detected user's utterance to the control section 101.

The communication section 103 includes, for example, a network interface communicating with a device connected to the network 21, such wireless communication interface establishing short-range wireless communication as a wireless LAN and a Bluetooth (registered trademark) interface, or other interfaces. The communication section 103 transmits and receives various types of data such as voice data to and from the communication management server 11. Further, the communication section 103 transmits and receives various types of data to and from an external apparatus installed in the same space as the interactive agent apparatus 1, such as a device targeted for control and or a sensor attached to the glass 62.

Under the control of the agent function section 111, the alcoholic beverage serving section 104 pours an alcoholic beverage from the bottle 61 into the glass 62. The above-mentioned alcoholic beverage server mechanism is implemented by the alcoholic beverage serving section 104. The alcoholic beverage serving section 104 prepares an alcoholic beverage according to the recipe data. Information indicating how to prepare an alcoholic beverage in a manner suitable for the style of drinking is included in the recipe data retained by the control section 101.

### - Configuration of Communication Management Server 11

FIG. 19 is a block diagram illustrating an example of a hardware configuration of the communication management server 11.

A CPU 201, a ROM 202, and a RAM 203 are interconnected by a bus 204.

The bus 204 is further connected to an input/output interface 205. The input/output interface 205 is connected to an input section 206 and an output section 207. The input section 206 includes, for example, a keyboard and a mouse. The output section 207 includes, for example, a display and a speaker.

Further, the input/output interface 205 is connected to a storage section 208, a communication section 209, and a drive 210. The storage section 208 includes, for example, a hard disk or a nonvolatile memory. The communication section 209 includes, for example, a network interface. The drive 210 drives removable medium 211.

The communication management server 11 includes a computer having the above-described configuration. The communication management server 11 may include a plurality of computers, instead of a single computer.

FIG. 20 is a block diagram illustrating an example of a functional configuration of the communication management server 11.

As depicted in FIG. 20, a control section 221 is implemented in the communication management server 11. The control section 221 includes a profile management section 231, a matching section 232, a Web service analysis section 233, a robot control section 234, a conversation analysis section 235, an emotion analysis section 236, an alcoholic beverage drinking progress analysis section 237, and a system utterance generation section 238. At least some of the component sections depicted in FIG. 20 are implemented when a predetermined program is executed by the CPU 201 depicted in FIG. 19.

The profile management section 231 manages the profile information regarding each user using the voice communication system. The profile information managed by the profile management section 231 not only includes information registered by use of the dedicated application, but also includes information regarding, for example, emotions during conversations and user's characteristics identified on the basis of the contents of conversations.

For example, on the basis of the profile information managed by the profile management section 231, the matching section 232 performs matching with respect to a user acting as a conversation partner. Information regarding the user matched by the matching section 232 is supplied to the Web service analysis section 233 and the robot control section 234.

The Web service analysis section 233 analyzes how a Web service is used by users conversing with each other. For example, the Web service analysis section 233 acquires information regarding the usage situation of the Web service from the dedicated application installed in the mobile terminal 2, and analyzes the acquired information.

By analyzing the acquired information, the Web service analysis section 233 identifies information regarding, for example, songs a user listens to by use of a music streaming service and products purchased by the user by use of a shopping site. The result of the analysis made by the Web service analysis section 233 is supplied to the system utterance generation section 238. On the basis of the result of the analysis made by the Web service analysis section 233, assisting utterances are generated in coordination with the Web service as described with reference to FIGS. 12 and 13.

The robot control section 234 controls the interactive agent apparatus 1, which is a bartender robot used by a user engaged in a conversation. For example, the robot control section 234 controls the communication section 209 so as to transmit voice data received from the interactive agent apparatus 1 of one user to the interactive agent apparatus 1 of the other user. The voice data of a user's utterance, which is received by the robot control section 234, is supplied to the conversation analysis section 235 and the emotion analysis section 236.

Further, the robot control section 234 transmits the voice data of a system utterance generated by the system utterance generation section 238 to the interactive agent apparatuses 1 of both users engaged in the conversation, and causes the interactive agent apparatuses 1 to output the system utterance.

Moreover, in a case where information indicating the remaining amount of alcoholic beverage is transmitted from the interactive agent apparatus 1, the robot control section 234 outputs the information indicating the remaining amount of alcoholic beverage, which is received by the communication section 209, to the alcoholic beverage drinking progress analysis section 237. The robot control section 234 communicates with the interactive agent apparatus 1 and performs various types of processes, for example, of controlling an IoT device through the interactive agent apparatus 1.

On the basis of the voice data supplied from the robot control section 234, the conversation analysis section 235 analyzes the status of an utterance, such as the period of time of utterance and the period of time of silence of each user engaged in a conversation. Further, the conversation analysis section 235 analyzes a keyword included in an utterance by analyzing the contents of the conversation. The result of the analysis made by the conversation analysis section 235 is supplied to the system utterance generation section 238. On the basis of the result of the analysis made by the conversation analysis section 235, assisting utterances are generated according to the status of the conversation as described with reference to FIGS. 9 to 11.

On the basis of the voice data supplied from the robot control section 234, the emotion analysis section 236 analyzes the emotion of each user engaged in a conversation. The result of the analysis made by the emotion analysis section 236 is supplied to the system utterance generation section 238. On the basis of the result of the analysis made by the emotion analysis section 236, an assisting utterance is generated according to the emotion as described with reference to FIG. 16.

On the basis of the information supplied from the robot control section 234, the alcoholic beverage drinking progress analysis section 237 analyzes the alcoholic beverage drinking progress of each user engaged in a conversation. As mentioned earlier, the information indicating the remaining amount of alcoholic beverage, which is transmitted from the interactive agent apparatus 1, is sensor data transmitted from the sensor attached to the glass 62. The analysis of the alcoholic beverage drinking progress of each user, which is made by the alcoholic beverage drinking progress analysis section 237, is performed On the basis of the sensor data transmitted from the sensor attached to the glass 62.

The result of the analysis made by the alcoholic beverage drinking progress analysis section 237 is supplied to the system utterance generation section 238. On the basis of the result of the analysis made by the alcoholic beverage drinking progress analysis section 237, assisting utterances are generated according to the remaining amount of alcoholic beverage as described with reference to FIGS. 14 and 15.

On the basis of the results of the analyses made by the Web service analysis section 233, the conversation analysis section 235, the emotion analysis section 236, and the alcoholic beverage drinking progress analysis section 237, the system utterance generation section 238 generates assisting utterances and supplies voice data of the generated assisting utterance to the robot control section 234. Further, the system utterance generation section 238 generates a system utterance other than the assisting utterances as needed and supplies voice data of the generated system utterance to the robot control section 234.

### <Operations of Apparatuses>

The following describes the basic operations of the communication management server 11 and the interactive agent apparatus 1, which are configured as described above.

### - Operation of Communication Management Server 11

First of all, a process performed by the communication management server 11 is described below with reference to the flowchart of FIG. 21.

In step S1, the matching section 232 references the profile information managed by the profile management section 231, performs matching with respect to a user acting as a conversation partner, and causes matched users to start conversing with each other.

In step S2, the robot control section 234 transmits and receives the voice data of user utterances to and from the interactive agent apparatuses 1 used by the users engaged in a conversation.

In step S3, on the basis of the voice data of utterances, the conversation analysis section 235 analyzes the status of the conversation between the two users.

In step S4, on the basis of the result of the analysis of the status of the conversation, the system utterance generation section 238 determines whether or not an assisting utterance is required.

In a case where it is determined in step S4 that an assisting utterance is required, processing proceeds to step S5. In step S5, the system utterance generation section 238 generates an assisting utterance, and causes the robot control section 234 to transmit the voice data of the generated assisting utterance to the interactive agent apparatus 1 of each user.

In step S6, the robot control section 234 determines whether or not the conversation is ended.

In a case where it is determined in step S6 that the conversation is not ended, processing returns to step S2 in order to repeat the above-described steps. Similarly, in a case where it is determined in step S4 that no assisting utterance is required, steps S2 and beyond are repeated.

In a case where it is determined in step S6 that the conversation is ended, the process terminates.

### - Operation of Interactive Agent Apparatus 1

Next, a process performed by the interactive agent apparatus 1 is described below with reference to the flowchart of FIG. 22.

In step S11, the microphone 102 detects an utterance of a user.

In step S12, the conversation control section 112 transmits the voice data of the user's utterance, which is supplied from the microphone 102, to the communication management server 11.

In step S13, the conversation control section 112 determines whether or not the voice data of an utterance of a user acting as a conversation partner or the voice data of a system utterance is transmitted from the communication management server 11.

In a case where it is determined in step S13 that the voice data is transmitted, processing proceeds to step S14. In step S14, under the control of the conversation control section 112, the speaker 52 outputs the utterance of the user acting as a conversation partner or the system utterance.

In a case where it is determined in step S15 that the conversation is ended, the process terminates.

The above-described process enables the user of the interactive agent apparatus 1 to readily enjoy a conversation with another user at home, for example, by use of an alcoholic beverage prepared by the interactive agent apparatus 1 as an evening drink. For example, even in a case where the conversation is halted, the user is able to establish smooth communication with the conversation partner with assistance provided by the communication management server 11.

Particularly, an elderly person living alone finds it difficult to go out. By using the interactive agent apparatus 1 as a communication tool for conversing with a person at a remote place as depicted in FIG. 23, the elderly person living alone is able to eliminate the feeling of loneliness.

In order to readily talk to a conversation partner about your anxiety and worries, you need to be provided with an environment satisfying conditions in which the conversation partner is a good listener, will protect your personal information, and is trusted by others, and conditions in which you are guaranteed not to meet the conversation partner in person, you have a third party acting as a go-between, and the like. The interactive agent apparatus 1 enables its user to readily build such an environment at home.

Further, by using the dedicated application, the user is able, for example, to manage alcohol consumption and review conversation records.

### <Others>

It has been assumed that the communication management server 11 includes all the component sections depicted in FIG. 20. Alternatively, however, the communication management server 11 may include at least some of the component sections depicted in FIG. 20.

It has been assumed that the interactive agent apparatus 1 serves alcoholic beverages. Alternatively, however, the interactive agent apparatus 1 may serve other beverages such as coffee, tea, or juice. Further, the interactive agent apparatus 1 may serve a meal. When a meal is served, each user is able to enjoy conversing with another user while having the meal.

### - Regarding Program

The above-described series of processes can be performed by hardware or by software. In a case where the series of processes is to be performed by software, a program included in the software is installed, for example, on a computer incorporated in dedicated hardware or on a general-purpose personal computer or the like from a program recording medium.

The program to be installed is recorded and supplied on a removable medium such as an optical disc (CD-ROM (Compact Disc-Read Only Memory), a DVD (Digital Versatile Disc) or a semiconductor memory. Further, the program may be supplied through a wired or wireless transmission medium such as a local area network, the Internet, or a digital broadcasting system. The program can be preinstalled in a ROM or a storage section.

It should be noted that the program to be executed by the computer may perform processing in a chronological order described in this specification or perform processing in a parallel manner or at a required time point in response, for example, to a program call.

The term "system" used in this specification denotes an aggregate of a plurality of component elements (e.g., devices and modules (parts)), and is applicable no matter whether or not all the component elements are within the same housing. Therefore, the term "system" denotes not only a plurality of apparatuses accommodated in separate housings and connected through a network, but also a single apparatus including a plurality of modules accommodated in a single housing.

It should be noted that advantages described in this specification are merely illustrative and not restrictive. The present technology can additionally provide advantages other than those described in this specification.

The embodiment of the present technology is not limited to the above-described one, and may be variously modified without departing from the scope and spirit of the present technology.

For example, the present technology can be configured for cloud computing in which one function is shared by a plurality of apparatuses through a network in order to perform processing in a collaborative manner.

Further, each step described with reference to the foregoing flowcharts can not only be performed by one apparatus but also be performed in a shared manner by a plurality of apparatuses.

Moreover, in a case where a plurality of processes is included in a single step, the plurality of processes included in such a single step can not only be performed by one apparatus but also be performed in a shared manner by a plurality of apparatuses.

### <Examples of Combined Configurations>

The present technology can also adopt the following configurations.
(1) An information processing apparatus including:
   an analysis section configured to analyze utterances that are generated from two users having a conversation through a network and that are detected by respective interactive robots used by the two users; and
   a control section configured to cause the respective interactive robots to output a conversation assisting voice according to a status of the conversation between the two users, the conversation assisting voice being a voice for providing assistance to the conversation.
(2) The information processing apparatus as described in (1) above, in which
   the control section causes the conversation assisting voice to be output according to a status of the conversation conducted after alcoholic beverages are served to the two users by the respective interactive robots.
(3) The information processing apparatus as described in (1) or (2) above, further including:
   a matching section configured to perform matching of the two users having a conversation, on the basis of profile information regarding each of the users.
(4) The information processing apparatus as described in any one of (1) to (3) above, in which
   on the basis of a period of time of an utterance of each of the two users, the control section causes the conversation assisting voice which prompts the user having a relatively short period of time of the utterance to generate an utterance to be output.
(5) The information processing apparatus as described in any one of (1) to (4) above, in which
   in a case where no utterance is generated by the two users for a predetermined period of time, the control section causes the conversation assisting voice which prompts the two users to generate utterances to be output.
(6) The information processing apparatus as described in any one of (1) to (5) above, in which
   the control section causes the conversation assisting voice indicating contents of information highlighted in news sites on the network to be output.
(7) The information processing apparatus as described in any one of (1) to (6) above, in which
   in a case where a word associated with a Web service used by one of the two users is contained in the utterances of the two users, the control section causes the conversation assisting voice to be output on the basis of a usage situation of the Web service.
(8) The information processing apparatus as described in any one of (1) to (7) above, in which
   the control section causes the conversation assisting voice to be output on the basis of a result of an analysis of emotions of the two users that is made on the basis of the utterances between the two users.
(9) The information processing apparatus as described in (8) above, in which
   the control section causes the conversation assisting voice indicating preferences of one of the two users having a negative emotion identified on the basis of information regarding the preferences of the two users to be output.
(10) The information processing apparatus as described in any one of (1) to (9) above, in which
   on the basis of a result of analysis of emotions of the two users that is made on the basis of the utterances of the two users, the control section controls a device installed together with the interactive robots in respective spaces where the two users are present.
(11) The information processing apparatus as described in (10) above, in which
   the control section transmits a control command that controls the device to the respective interactive robots to control the device through the respective interactive robots or that transmits the control command to mobile terminals owned by the respective users to control the device through the respective mobile terminals.
(12) The information processing apparatus as described in (2) above, in which
   the control section causes the conversation assisting voice to be output according to a result of analysis made on the basis of sensor data indicating an alcoholic beverage drinking progress of each of the two users.
(13) A control method for causing an information processing apparatus to perform a process of:
   analyzing utterances that are generated by two users having a conversation through a network and that are detected by interactive robots used respectively by the two users; and
   causing the respective interactive robots to output a conversation assisting voice according to the status of the conversation between the two users, the conversation assisting voice being a voice that provides assistance to the conversation.
(14) An interactive robot including:
   a serving section configured to serve an alcoholic beverage to a user; and
   a conversation control section configured to detect an utterance of the user after the alcoholic beverage is served, transmit voice data of the detected utterance to an information processing apparatus configured to analyze the utterance of the user and the utterance of another user acting as a conversation partner, and output a conversation assisting voice that is transmitted from the information processing apparatus according to a status of a conversation between the two users, the conversation assisting voice being a voice that provides assistance to the conversation.
(15) The interactive robot as described in (14) above further including:
   a detection section configured to detect a remaining amount of alcoholic beverage of each of the two users and transmit information indicative of the detected remaining amount of alcoholic beverage to the information processing apparatus, in which
   the conversation control section causes the conversation assisting voice that is transmitted from the information processing apparatus according to an alcoholic beverage drinking progress of each of the two users to be output.
(16) A control method for causing an interactive robot to perform a process of:
   serving an alcoholic beverage to a user;
   detecting an utterance of the user after the alcoholic beverage is served and transmitting voice data of the detected utterance to an information processing apparatus that analyzes the utterance of the user and the utterance of another user acting as a conversation partner; and
   causing a conversation assisting voice that is transmitted from the information processing apparatus according to a status of a conversation between the two users, the conversation assisting voice being a voice that provides assistance to the conversation.

### [Reference Signs List]

1A, 1B: Interactive agent apparatus
2A, 2B: Mobile terminal
11: Communication management server
21: Network
51: Housing
61: Bottle
62: Glass
101: Control section
102: Microphone
103: Communication section
104: Alcoholic beverage serving section
111: Agent function section
112: Conversation control section
113: Device control section
114: Sensor data acquisition section
221: Control section
231: Profile management section
232: Matching section
233: Web service analysis section
234: Robot control section
235: Conversation analysis section
236: Emotion analysis section
237: Alcoholic beverage drinking progress analysis section
238: System utterance generation section

## Claims

1. An information processing apparatus comprising:
an analysis section configured to analyze utterances that are generated from two users having a conversation through a network and that are detected by respective interactive robots used by the two users; and
a control section configured to cause the respective interactive robots to output a conversation assisting voice according to a status of the conversation between the two users, the conversation assisting voice being a voice for providing assistance to the conversation.

2. The information processing apparatus according to claim 1, wherein
the control section causes the conversation assisting voice to be output according to a status of the conversation conducted after alcoholic beverages are served to the two users by the respective interactive robots.

3. The information processing apparatus according to claim 1, further comprising:
a matching section configured to perform matching of the two users having a conversation, on a basis of profile information regarding each of the users.

4. The information processing apparatus according to claim 1, wherein,
on a basis of a period of time of an utterance of each of the two users, the control section causes the conversation assisting voice which prompts the user having a relatively short period of time of the utterance to generate an utterance to be output.

5. The information processing apparatus according to claim 1, wherein,
in a case where no utterance is generated by the two users for a predetermined period of time, the control section causes the conversation assisting voice which prompts the two users to generate utterances to be output.

6. The information processing apparatus according to claim 1, wherein
the control section causes the conversation assisting voice indicating contents of information highlighted in news sites on the network to be output.

7. The information processing apparatus according to claim 1, wherein,
in a case where a word associated with a Web service used by one of the two users is contained in the utterances of the two users, the control section causes the conversation assisting voice to be output on a basis of a usage situation of the Web service.

8. The information processing apparatus according to claim 1, wherein
the control section causes the conversation assisting voice to be output on a basis of a result of an analysis of emotions of the two users that is made on a basis of the utterances between the two users.

9. The information processing apparatus according to claim 8, wherein
the control section causes the conversation assisting voice indicating preferences of one of the two users having a negative emotion identified on a basis of information regarding the preferences of the two users to be output.

10. The information processing apparatus according to claim 1, wherein,
on a basis of a result of analysis of emotions of the two users that is made on a basis of the utterances of the two users, the control section controls a device installed together with the interactive robots in respective spaces where the two users are present.

11. The information processing apparatus according to claim 10, wherein
the control section transmits a control command that controls the device to the respective interactive robots to control the device through the respective interactive robots or that transmits the control command to mobile terminals owned by the respective users to control the device through the respective mobile terminals.

12. The information processing apparatus according to claim 2, wherein
the control section causes the conversation assisting voice to be output according to a result of analysis made on a basis of sensor data indicating an alcoholic beverage drinking progress of each of the two users.

13. A control method for causing an information processing apparatus to perform a process of:
analyzing utterances that are generated by two users having a conversation through a network and that are detected by interactive robots used respectively by the two users; and
causing the respective interactive robots to output a conversation assisting voice according to the status of the conversation between the two users, the conversation assisting voice being a voice that provides assistance to the conversation.

14. An interactive robot comprising:
a serving section configured to serve an alcoholic beverage to a user; and
a conversation control section configured to detect an utterance of the user after the alcoholic beverage is served, transmit voice data of the detected utterance to an information processing apparatus configured to analyze the utterance of the user and the utterance of another user acting as a conversation partner, and output a conversation assisting voice that is transmitted from the information processing apparatus according to a status of a conversation between the two users, the conversation assisting voice being a voice that provides assistance to the conversation.

15. The interactive robot according to claim 14, further comprising:
a detection section configured to detect a remaining amount of alcoholic beverage of each of the two users and transmit information indicative of the detected remaining amount of alcoholic beverage to the information processing apparatus, wherein
the conversation control section causes the conversation assisting voice that is transmitted from the information processing apparatus according to an alcoholic beverage drinking progress of each of the two users to be output.

16. A control method for causing an interactive robot to perform a process of:
serving an alcoholic beverage to a user;
detecting an utterance of the user after the alcoholic beverage is served and transmitting voice data of the detected utterance to an information processing apparatus that analyzes the utterance of the user and the utterance of another user acting as a conversation partner; and
causing a conversation assisting voice that is transmitted from the information processing apparatus according to a status of a conversation between the two users, the conversation assisting voice being a voice that provides assistance to the conversation.
